# EUROPEAN PATENT SPECIFICATION

(11) **EP 2 624 444 B1**
(45) Date of publication and mention of the grant of the patent: **25.08.2021**
(21) Application number: 13150923.4
(22) Date of filing: 11.01.2013
(51) Int. Cl.: H02P 25/18, H02K 3/00, H02K 3/28

(54) **Rotary electric machine system**
Elektrisches Rotationsmaschinensystem
Système de machine rotative électrique

(30) Priority: 03.02.2012 JP 2012022070
(43) Date of publication of application: 07.08.2013
(73) Proprietor: Kabushiki Kaisha Yaskawa Denki, Kitakyushu-shi, Fukuoka 806-0004 (JP)
(72) Inventor: Tomohara, Kenji, Kitakyushu-shi, Fukuoka 806-0004 (JP); Maemura, Akihiko, Kitakyushu-shi, Fukuoka 806-0004 (JP)
(74) Representative: Viering, Jentschura & Partner mbB Patent- und Rechtsanwälte

(56) References cited:
- EP-A1- 0 397 891
- EP-A1- 1 439 633
- JP-A- S5 928 862
- US-A- 4 322 665

## Description

### BACKGROUND OF THE INVENTION

### Field of the Invention

The present invention relates to a three-phase rotary electric machine system.

### Description of the Related Art

Conventionally, there is known a winding switch device (rotary electric machine system) having a stator (see, e.g., Japanese Patent Application Publication No. 2003-111492 (JP2003-111492A)).

In JP2003-111492A, a winding switch device (rotary electric machine system) is disclosed, the device including an AC (Alternating Current) motor having a plurality of windings provided for each phase; and a winding switch unit for switching a connection state of the windings of each phase between a high speed drive state and a low speed drive state. In this winding switch device, during low speed drive, the windings of each phase are connected in series by the winding switch unit such that a relatively large torque can be generated from the AC motor. Further, during high speed drive, some of the windings of each phase are used by the winding switch unit such that the rotational speed of the AC motor is relatively high.

In this conventional winding switch device, for example, in the case where the windings (e.g., windings of 10 turns) are disposed in one slot of the stator, switching is performed by the winding switch unit such that all windings are used during low speed drive and some (windings of 6 turns among 10 turns) of the windings are used during high speed drive. In this case, during high speed drive, in one slot, a voltage phase difference may occur between the induced voltage of the windings (windings of the remaining 4 turns among 10 turns) that are not used and the voltage of the windings that are used during high speed drive, and a voltage may be generated between the windings that are not used and the windings that are used during high speed drive. This may lead to a problem, e.g., dielectric breakdown. To deal with such a problem, conventionally, an insulator is provided between the windings, which are used during both high speed drive and low speed drive, and the windings which are used during only low speed drive (i.e., between the windings of 6 turns and the remaining windings of 4 turns among 10 turns), all the wirings being disposed in the same slot.

However, in the winding switch device (rotary electric machine system) disclosed in JP2003-111492, since the insulator is disposed in the slot, the configuration of the rotary electric machine system becomes more complex.

Therefore, it is needed to simplify the configuration of the rotary electric machine system.

JP S59 28862 A discloses a rotary electric machine system comprising: a rotor; and a stator including first windings to be used during both of a low speed drive and a high speed drive, second windings to be used only during the low speed drive, and a plurality of slots provided per pole per phase, wherein the first windings and the second windings are distributively wound on different slots in the slots per pole per phase.

EP0397891 A1 discloses an AC spindle motor wherein the three phase stator windings include a first group of windings to be energized in a low-speed and in a high-speed operation range and a second group of windings to be energized only in the low-speed operation range. The stator windings being arranged in a plurality of slots per pole per phase.

### SUMMARY OF THE INVENTION

According to the present invention, a three-phase rotary electric machine system as defined by claim 1 is provided. The dependent claims show some examples of such a rotary electric machine system.

In view of the above, embodiments disclosed herein provide a three-phase rotary electric machine system which has a simplified configuration thereof.

### BRIEF DESCRIPTION OF THE DRAWINGS

The objects and features of the present invention will become apparent from the following description of embodiments, given in conjunction with the accompanying drawings, in which:
FIG. 1 is a block diagram showing an entire configuration of a rotary electric machine system in accordance with a first embodiment of the present invention;
FIG. 2 is a circuit diagram of the rotary electric machine system;
FIG. 3 shows windings disposed in a slot of the rotary electric machine system;
FIG. 4 shows molded windings inserted into the slot of the rotating electric machine system;
FIG. 5 is a diagram showing a relationship between the torque and the rotational speed of a conventional low speed drive motor;
FIG. 6 is a diagram showing a relationship between the torque and the rotational speed of a conventional high speed drive motor;
FIG. 7 is a diagram showing a relationship between the torque and the rotational speed of the rotary electric machine system in accordance with the first embodiment of the present invention;
FIG. 8 is a diagram showing windings disposed in a slot of a rotary electric machine system in accordance with a second embodiment of the present invention;
FIG. 9 is a circuit diagram of the rotary electric machine system;
FIG. 10 shows windings disposed in a slot of a rotary electric machine system in accordance with a third embodiment not forming part of the invention; and
FIG. 11 is a circuit diagram of the rotary electric machine system.

### DESCRIPTION OF THE EMBODIMENTS

Hereinafter, embodiments of the present invention will be described in detail with reference to the accompanying drawings.

### (First Embodiment)

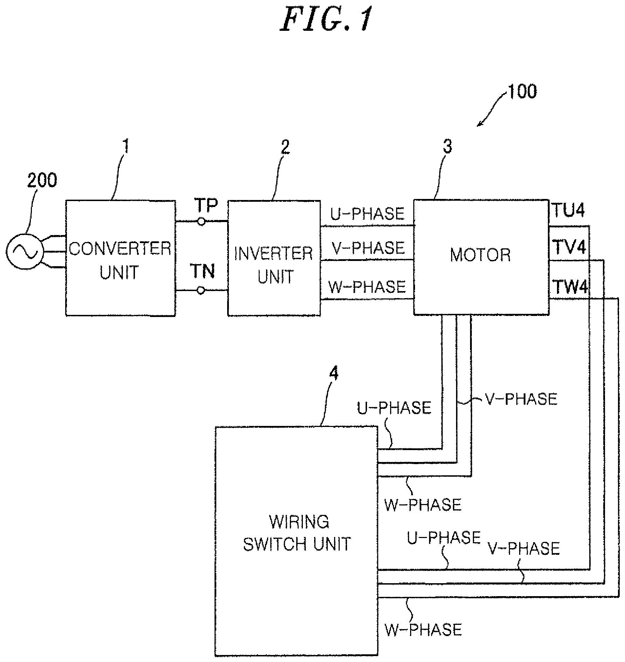

First, a configuration of a rotary electric machine system 100 in accordance with a first embodiment of the present invention will be described with reference to FIGS. 1 to 4.

As shown in FIG. 1, the rotary electric machine system 100 includes a converter unit 1; an inverter unit 2; a motor 3; and a winding switch unit 4. The converter unit 1 is connected to the inverter unit 2 via terminals TP and TN. The inverter unit 2 is connected to the motor 3. Further, the motor 3 is connected to the winding switch unit 4. Further, the converter unit 1 is connected to a three-phase AC power supply 200.

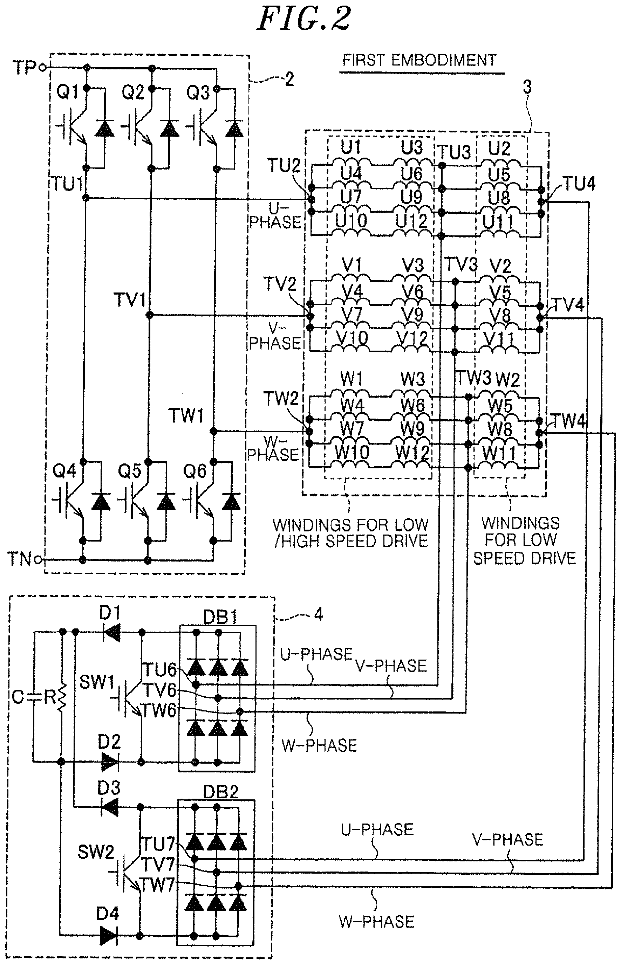

As shown in FIG. 2, the inverter unit 2 includes transistors Q1 to Q6. One end of the transistor Q1 is connected to the terminal TP, and the other end of the transistor Q1 is connected to one end of the transistor Q4. The other end of the transistor Q4 is connected to the terminal TN. In addition, the other end of the transistor Q1 and one end (terminal TU1) of the transistor Q4 are connected to a terminal TU2 (U-phase windings U1, U4, U7 and U10 for low/high speed drive in the motor 3).

Further, one end of the transistor Q2 is connected to the terminal TP, and the other end of the transistor Q2 is connected to one end of the transistor Q5. The other end of the transistor Q5 is connected to the terminal TN. Furthermore, the other end of the transistor Q2 and one end (terminal TV1) of the transistor Q5 are connected to a terminal TV2 (V-phase windings V1, V4, V7 and V10 for low/high speed drive in the motor 3).

Additionally, one end of the transistor Q3 is connected to the terminal TP, and the other end of the transistor Q3 is connected to one end of the transistor Q6. The other end of the transistor Q6 is connected to the terminal TN. Further, the other end of the transistor Q3 and one end (terminal TW1) of the transistor Q6 are connected to a terminal TW2 (W-phase windings W1, W4, W7 and W10 for low/high speed drive in the motor 3).

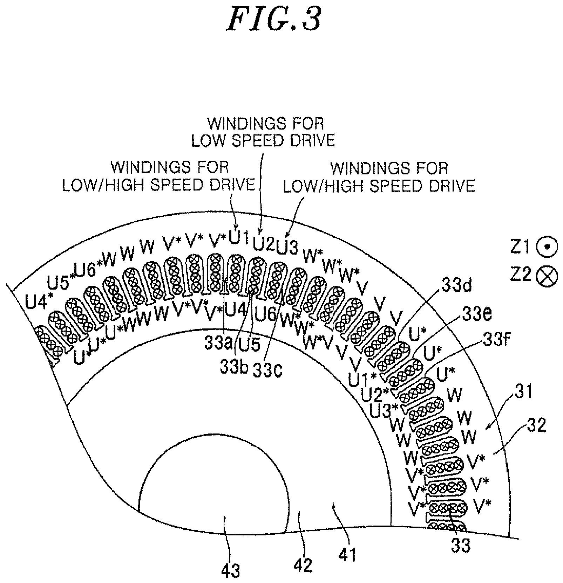

As shown in FIG. 3, the motor 3 includes a stator 31 and a rotor 41. The stator 31 includes a stator core 32; U-phase windings U1 to U12 (see FIG. 2); V-phase windings V1 to V12; and W-phase windings W1 to W12. A plurality of slots 33 (72 pieces in the example of the first embodiment) are formed on the inside of the stator core 32. In addition, the rotor 41 includes a rotor core 42; a shaft 43; and a permanent magnet (not shown).

As shown in FIG. 2, the U-phase windings include windings U1, U3, U4, U6, U7, U9, U10 and U12 for low/high speed drive to be used during both high speed drive and low speed drive and windings U2, U5, U8 and U11 for low speed drive to be used during only low speed drive. Further, the V-phase windings include windings V1, V3, V4, V6, V7, V9, V10 and V12 for low/high speed drive to be used during both high speed drive and low speed drive and windings V2, V5, V8 and V11 for low speed drive to be used during only low speed drive. Furthermore, the W-phase windings include windings W1, W3, W4, W6, W7, W9, W10 and W12 for low/high speed drive to be used during both high speed drive and low speed drive and windings W2, W5, W8 and W11 for low speed drive to be used during only low speed drive. In addition, the windings for low speed drive are not used during high speed drive.

In this case, in the first embodiment, the windings U2, U5, U8 and U11 for low speed drive to be used during only low speed drive, and the windings U1, U3, U4, U6, U7, U9, U10 and U12 for low/high speed drive to be used during both high speed drive and low speed drive are distributively wound on the three slots 33 for each pole (e.g., the windings U1, U2 and U3) of the U-phase. That is, the number of slots per pole per phase is three. Accordingly, since there are three phases and eight poles in the example of this embodiment, total 72 slots are provided, and only four poles per phase are illustrated for simplicity in FIG. 2. Further, the windings U2, U5, U8 and for low speed drive and the windings U1, U3, U4, U6, U7, U9, U10 and U12 for low/high speed drive are disposed in three different slots 33 for each pole of the U-phase.

Specifically, as shown in FIG. 3, the winding U2 for low speed drive and the windings U1 and U3 for low/high speed drive are distributively wound on the three slots 33 (33a, 33b and 33c). Then, in the three slots 33a, 33b and 33c, the windings U1 and U3 for low/high speed drive are disposed in the outside slots 33a and 33c on opposite sides, and the winding U2 for low speed drive is disposed in the middle slot 33b. Further, the winding for low speed drive and the winding for low/high speed drive are the respective examples of "low speed winding" and "low/high speed winding".

Further, as shown in FIG. 3, a portion of the winding U1 for low/high speed drive, which is wound in a direction toward the front side in the drawing (hereinafter referred to as Z1 direction), is disposed in the slot 33a. A portion U1* of the winding U1 for low/high speed drive, which is wound in a direction toward the back side in the drawing (hereinafter referred to as Z2 direction), is disposed in the slot 33d, which is separated by 9 slots from the slot 33a. Further, a portion of the winding U2 for low/high speed drive, which is arranged in the Z1 direction, is disposed in the slot 33b, and a portion U2* of the winding U2 for low/high speed drive, which is wound in the Z2 direction, is disposed in the slot 33e, which is separated by 9 slots from the slot 33b. Furthermore, a portion of the winding U3 for low/high speed drive, which is arranged in the Z1 direction, is disposed in the slot 33c, and a portion U3* of the winding U3 for low/high speed drive, which is wound in the Z2 direction, is disposed in the slot 33f, which is separated by 9 slots from the slot 33c.

Further, in the first embodiment, as shown in FIG. 2, the windings U1 and U3 for low/high speed drive disposed in the slots 33a and 33c are electrically connected to each other. The winding U2 for low speed drive and the windings U1 and U3 for low/high speed drive are connected to each other, and are configured to be electrically connected to or disconnected from each other by the winding switch unit 4.

In addition, the U-phase windings U4 and U6 (U7 and U9, U10 and U12) for low/high speed drive and the winding U5 (U8, U11) for low speed drive are also disposed in the slots 33. Further, in the first embodiment, the windings U2, U5, U8 and U11 for low speed drive for each pole of the U-phase are electrically connected to each other, and the windings U1, U3, U4, U6, U7, U9, U10 and U12 for low/high speed drive for each pole of the U-phase are electrically connected to each other.

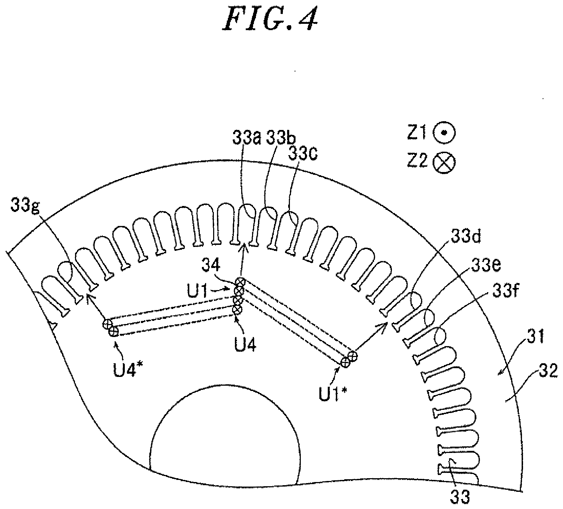

Further, as shown in FIGS. 3 and 4, the windings U1, U3, U4, U6, U7, U9, U10 and U12 for low/high speed drive and the windings U2, U5, U8 and U11 for low speed drive are formed by round wires 34 (copper wires having a circular cross section). Further, four round wires 34 (four windings for low speed drive or four windings for low/high speed drive) are disposed in each of the slots 33. That is, the number of turns of the winding wound for one slot is four. Further, the windings U1, U3, U4, U6, U7, U9, U10 and U12 for low/high speed drive are molded in the form of a series of coils in advance by the round wires 34, and the windings U2, U5, U8 and for low speed drive are molded in the form of a series of coils in advance by the round wires 34.

Further, as shown in FIG. 4, as the order of insertion into the slots 33 of the winding, for example, after the winding U4* for low/high speed drive is inserted into the slot 33g, the winding U1 for low/high speed drive is inserted into the slot 33a. Then, after the winding U4 for low/high speed drive is inserted, the winding U1* for low/high speed drive is inserted into the slot 33d. That is, the winding U1 for low/high speed drive and the winding U4 for low/high speed drive are wound to be superimposed on each other. Further, other windings for low/high speed drive and windings for low speed drive are also disposed in the corresponding slots 33.

In addition, the V-phase windings (windings V1, V3, V4, V6, V7, V9, V10 and V12 for low/high speed drive, and windings V2, V5, V8 and V11 for low speed drive) and the W-phase windings (windings W1, W3, W4, W6, W7, W9, W10 and W12 for low/high speed drive, and windings W2, W5, W8 and W11 for low speed drive) are also disposed in the corresponding slots 33.

As shown in FIG. 2, a terminal TU3 between the U-phase windings U1 and U3 (U4 and U6, U7 and U9, U10 and U12) for low/high speed drive and the winding U2 (U5, U8, U11) for low speed drive is connected to a terminal TU6 of a diode bridge DB1 of the winding switch unit 4, which will be described later. Similarly, a terminal TV3 between the V-phase windings V1 and V3 (V4 and V6, V7 and V9, V10 and V12) for low/high speed drive and the winding V2 (V5, V8, V11) for low speed drive is connected to a terminal TV6 of the diode bridge DB1 of the winding switch unit 4.

Similarly, a terminal TW3 between the W-phase windings W1 and W3 (W4 and W6, W7 and W9, W10 and W12) for low/high speed drive and the winding W2 (W5, W8, W11) for low speed drive is connected to a terminal TW6 of the diode bridge DB1 of the winding switch unit 4. Further, terminals TU4, TV4 and TW4 of the motor 3 are connected to terminals TU7, TV7 and TW7 of a diode bridge DB2 of the winding switch unit 4, respectively.

The winding switch unit 4 includes diode bridges DB1 and DB2, each having six diodes; semiconductor switches SW1 and SW2, each of which is formed of, e.g., a bipolar transistor or IGBT (Insulated Gate Bipolar mode Transistor); diodes D1, D2, D3 and D4; a capacitor C; and a discharge resistor R. The diode bridges DB1 and DB2 include terminals TU6, TV6 and TW6 and TU7, TV7 and TW7, respectively. The diodes D1 and D2 are connected to one end and the other end of the diode bridge DB1, respectively. Also, the semiconductor switch SW1 is connected to one end and the other end of the diode bridge DB1.

Further, the diodes D3 and D4 are connected to one end and the other end of the diode bridge DB2, respectively. The semiconductor switch SW2 is also connected to one end and the other end of the diode bridge DB2. A capacitor C and a discharge resistor R are connected in parallel. In addition, one end of the capacitor C and one end of the discharge resistor R are connected to the cathode of the diode D1 and the cathode of the diode D3. Further, the other end of the capacitor C and the other end of the discharge resistor R are connected to the anode of the diode D2 and the anode of the diode D4.

The diodes D1 and D2 have a function of allowing the current flowing through the diode bridge DB1 to flow in the parallel circuit of the capacitor C and the discharge resistor R when the semiconductor switch SW1 is in the OFF state, and a function of preventing the current from flowing back to the semiconductor switch SW1 from the parallel circuit of the capacitor C and the discharge resistor R when the semiconductor switch SW1 is in the ON state. The diodes D3 and D4 also have functions similar to those of the diodes D1 and D2.

Next, the operation of the winding switch unit 4 will be described with reference to FIGS. 2 and 5 to 7.

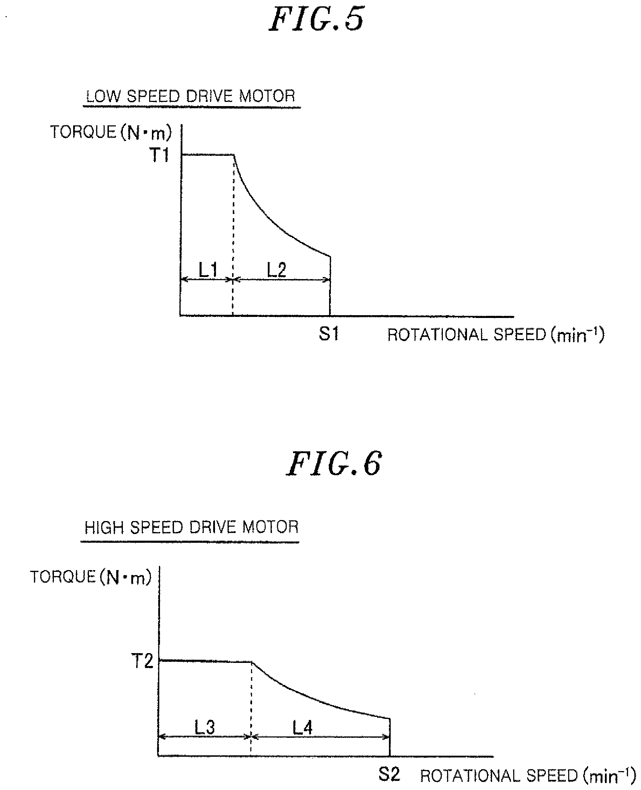

First, a relationship between the torque and the rotational speed of a conventional low speed drive motor and a conventional high speed drive motor will be described with reference to FIGS. 5 and 6. As shown in FIG. 5, in the low speed drive motor, the torque is substantially constant at T1 (N·m) when the rotational speed is small (constant torque range L1). Then, the torque decreases as the rotational speed increases while the output (constant output range L2) is constantly maintained. Further, the maximum rotational speed is S1 (min⁻¹) . In addition, in the low speed drive motor, a ratio of the constant torque range L1 to the constant output range L2 is, e.g., 1:1.7.

As shown in FIG. 6, even in the high speed drive motor, similarly, the torque is substantially constant (e.g., T1 = 1.5 T2) at T2 (N·m) when the rotational speed is small (constant torque range L3), and then the torque decreases as the rotational speed increases while the output (constant output range L4) is constantly maintained. Further, the maximum rotational speed is S2(min⁻¹) (e.g., S2 = 1.5S1). In addition, in the high speed drive motor, a ratio of the constant torque range L3 to the constant output range L4 is, e.g., 1:1.5.

As described above, in the low speed drive motor, a large torque is obtained, while it is difficult to increase the rotational speed. Further, in the high speed drive motor, it is possible to increase the rotational speed, while it is difficult to obtain a large torque.

### (During Low Speed Drive)

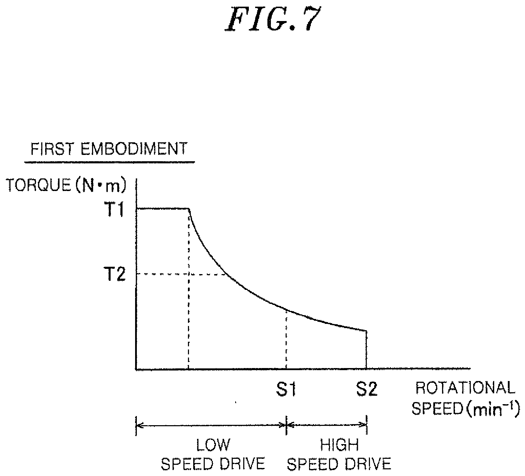

In the rotary electric machine system 100 of the first embodiment, during low speed drive (equal to or greater than 0(min⁻¹) and less than S1(min⁻¹)), the semiconductor switch SW1 shown in FIG. 2 is in the OFF state, and the semiconductor switch SW2 is in the ON state. Thus, the terminals TU4, TV4 and TW4 of the motor 3 are shortcircuited. As a result, star connection is configured by the windings U1 to U12 between the terminal TU2 and the terminal TU4, the windings V1 to V12 between the terminal TV2 and the terminal TV4, and the windings W1 to W12 between the terminal TW2 and the terminal TW4 while using the terminals TU4, TV4 and TW4 as neutral points. Accordingly, a voltage is applied to all the windings (U-phase windings U1 to U12, V-phase windings V1 to V12, and W-phase windings W1 to W2). Thus, since the wiring impedance is increased compared to the case of the high speed drive which will be described later, a high voltage can be applied to the windings. Accordingly, the torque of the motor 3 is increased (see the "low speed drive" of FIG. 7).

### (During High Speed Drive)

During high speed drive (equal to or greater than S1(min⁻¹) and equal to or less than S2(min⁻¹)), the semiconductor switch SW1 shown in FIG. 2 is in the ON state, and the semiconductor switch SW2 is in the OFF state. Thus, the terminals TU3, TV3 and TW3 of the motor 3 are shortcircuited. As a result, star connection is configured by the windings (windings U1, U3, U4, U6, U7, U9, U10 and U12 for low/high speed drive) between the terminal TU2 and the terminal TU3, the windings (windings V1, V3, V4, V6, V7, V9, V10 and V12 for low/high speed drive) between the terminal TV2 and the terminal TV3, and the windings (windings W1, W3, W4, W6, W7, W9, W10 and W12 for low/high speed drive) between the terminal TW2 and the terminal TW3 while using the terminals TU3, TV3 and TW3 as neutral points. Thus, a voltage is applied to the U-phase windings U1, U3, U4, U6, U7, U9, U10 and U12 for low/high speed drive, the V-phase windings V1, V3, V4, V6, V7, V9, V10 and V12 for low/high speed drive, and the W-phase windings W1, W3, W4, W6, W7, W9, W10 and W12 for low/high speed drive.

However, a voltage is not applied to the U-phase windings U2, U5, U8 and for low speed drive, the V-phase windings V2, V5, V8 and V11 for low speed drive, and the W-phase windings W2, W5, W8 and W11 for low speed drive. Thus, since the wiring impedance becomes smaller compared to the case of using all of the windings of the motor 3 (during low speed drive), the motor 3 is driven at high speed (see the "high speed drive" of FIG. 7). Further, the windings for low speed drive and the windings for low/high speed drive of each pole are disposed in the different slots 33, and a voltage is not induced in the windings for low speed drive that is not used during high speed drive.

In the first embodiment, as described above, the windings U2, U5, U8 and U11 (V2, V5, V8 and V11, W2, W5, W8 and W11) for low speed drive, and the windings U1, U3, U4, U6, U7, U9, U10 and U12 (V1, V3, V4, V6, V7, V9, V10 and V12, W1, W3, W4, W6, W7, W9, W10 and W12) for low/high speed drive are disposed in the different slots 33 in the three slots 33 of each pole. Thus, during high speed drive in which some windings for low/high speed drive among the windings are used, there is no case where the same slot simultaneously has the windings that are not used and the windings that are used. Therefore, it is possible to prevent the occurrence of a phase difference between the voltage of the windings (winding for low/high speed drive) used during high speed drive and the induced voltage of the windings that are not used.

As a result, unlike the case where the windings for low speed drive and the windings for low/high speed drive are disposed in the same slot, there is no need to place an insulating material between the windings for low speed drive and the windings for low/high speed drive in order to prevent, e.g., dielectric breakdown caused by the voltage generated from the voltage phase difference. Accordingly, it is possible to simplify the structure.

Further, in the first embodiment, as described above, three slots 33 are provided per pole per phase. In the three slots 33, the windings for low/high speed drive are disposed in the outside slots 33 (33a and 33c) on opposite sides, and the windings for low speed drive is disposed in the middle slot 33 (33b). Thus, in the three slots 33, it is possible to make the center of the windings (windings for low speed drive and windings for low/high speed drive) to be used during low speed drive in the circumferential direction of the stator 31 identical to the center of the windings (windings for low/high speed drive) to be used during high speed drive in the circumferential direction of the stator 31. Therefore, the voltage peak (phase) can be equalized during low speed drive and during high speed drive.

Further, in the first embodiment, as described above, the winding switch unit 4 is provided to switch the connection between the windings for low speed drive and the windings for low/high speed drive. Accordingly, to perform the low speed drive, the windings for low speed drive and the windings for low/high speed drive disposed in the different slots 33 are brought into a connection state by the winding switch unit 4. To perform the high speed drive, the connection state of the windings for low speed drive and the windings for low/high speed drive is cut off by the winding switch unit 4. Thus, unlike the case where the windings to be used during low speed drive and the windings to be used during high speed drive are separately provided, since the windings for low/high speed drive can be used commonly during low speed drive and during high speed drive, it is possible to further simplify the configuration.

Further, in the first embodiment, as described above, in the three slots 33 per pole per phase, the windings for low/high speed drive are disposed in the two slots 33 (33a and 33c) and the windings for low/high speed drive disposed in the two slots 33 are electrically connected to each other. In addition, the windings for low speed drive and the windings for low/high speed drive are configured to be electrically connected to or disconnected from each other by the winding switch unit 4. Accordingly, the windings for low/high speed drive and the windings for low speed drive can be easily electrically connected (or disconnected) by the winding switch unit 4.

Further, in the first embodiment, as described above, the windings for low speed drive per pole per phase are electrically connected to each other, and the windings for low/high speed drive per pole per phase are electrically connected to each other. Accordingly, unlike the case where the windings for low speed drive per pole per phase and the windings for low/high speed drive per pole per phase are respectively separately provided without being electrically connected to each other, it is possible to further simplify the configuration.

### (Second Embodiment)

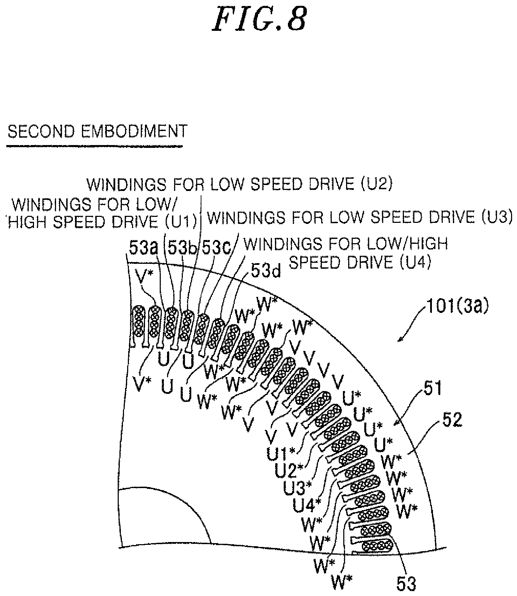

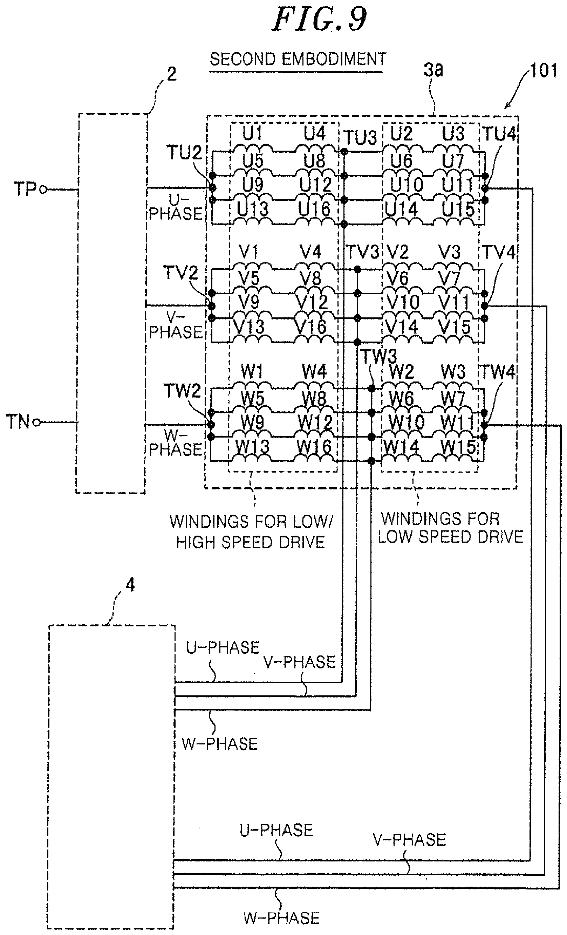

Next, a rotary electric machine system 101 in accordance with a second embodiment of the present invention will be described with reference to FIGS. 8 and 9. In the rotary electric machine system 101 of the second embodiment, unlike the first embodiment in which the windings for low speed drive and the windings for low/high speed drive are disposed in the three slots 33 per pole per phase, the windings for low speed drive and the windings for low/high speed drive are disposed in four slots 53 per pole per phase.

As shown in FIG. 8, in the rotary electric machine system 101 of the second embodiment, a stator 51 of a motor 3a includes a stator core 52; U-phase windings U1 to U16 (see FIG. 9); V-phase windings V1 to V16, and W-phase windings W1 to W16. A plurality of slots 53 (96 pieces in the example of the second embodiment) are formed on the inside of the stator core 52.

As shown in FIG. 9, the U-phase windings include windings U1, U4, U5, U8, U9, U12, U13 and U16 for low/high speed drive to be used during both high speed drive and low speed drive and windings U2, U3, U6, U7, U10, U11, U14 and U15 for low speed drive to be used during only low speed drive. Further, the V-phase windings include windings V1, V4, V5, V8, V9, V12, V13 and V16 for low/high speed drive to be used during both high speed drive and low speed drive and windings V2, V3, V6, V7, V10, V11, V14 and V15 for low speed drive to be used during only low speed drive. Furthermore, the W-phase windings include windings W1, W4, W5, W8, W9, W12, W13 and W16 for low/high speed drive to be used during both high speed drive and low speed drive and windings W2, W3, W6, W7, W10, W11, W14 and W15 for low speed drive to be used during only low speed drive.

In this case, in the second embodiment, as shown in FIG. 8, the windings U2 and U3 for low speed drive and the windings U1 and U4 for low/high speed drive are distributively wound on the four slots 53 (53a, 53b, 53c and 53d), respectively. Specifically, in the four slots 53a, 53b, 53c and 53d, the windings U1 and U4 for low/high speed drive are disposed in the outside slots 53a and 53d on opposite sides, and the windings U2 and U3 for low speed drive are disposed in the slots 53b and 53c between the slots 53a and 53d. In addition, the remaining U-phase windings and the V-phase and W-phase windings are also disposed in the corresponding slots 53.

Further, other configurations and effects of the second embodiment are the same as the first embodiment.

### (Third Embodiment)

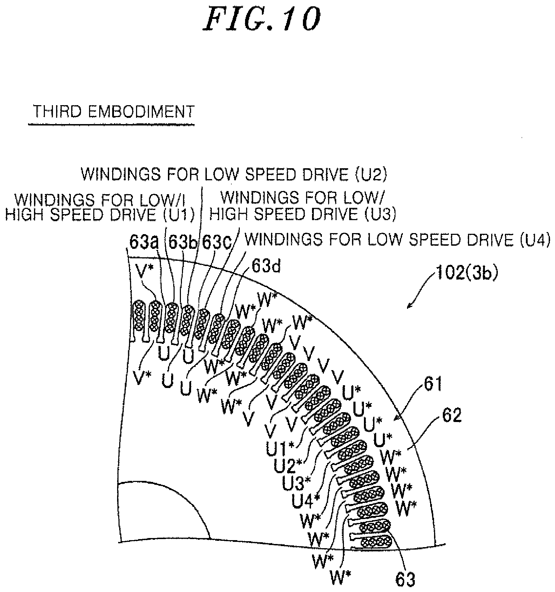

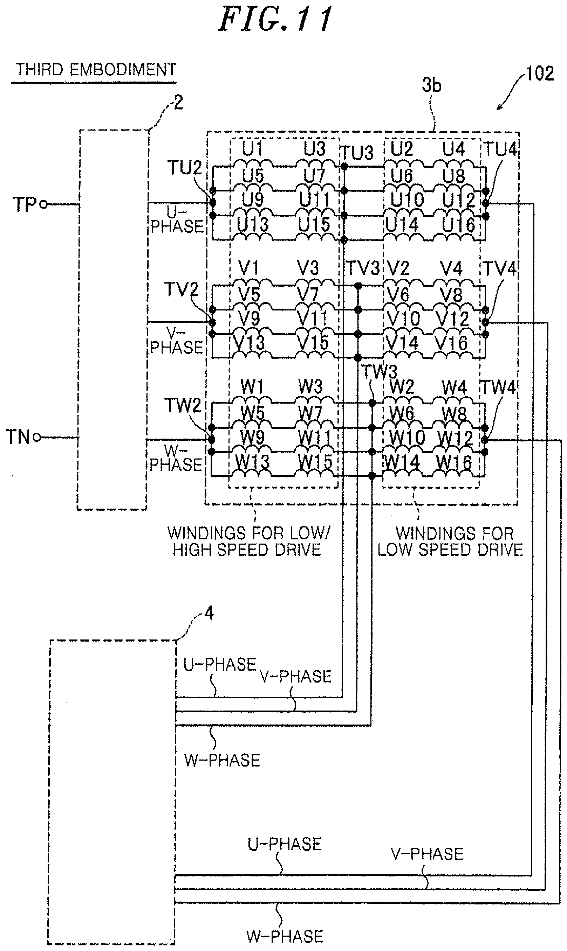

Next, a rotary electric machine system 102 in accordance with a third embodiment not forming part of the invention will be described with reference to FIGS. 10 and 11. In the rotary electric machine system 102 of the third embodiment, unlike the second embodiment in which the windings for low/high speed drive are disposed in the outside slots 53 on opposite sides, and the windings for low speed drive are disposed in the slots 53 between the outside slots 53 on opposite sides, the windings for low/high speed drive and the windings for low speed drive are alternately disposed in slots 63.

As shown in FIG. 10, in the rotary electric machine system 102 of the third embodiment, a stator 61 of a motor 3b includes a stator core 62; U-phase windings U1 to U16 (see FIG. 11); V-phase windings V1 to V16; and W-phase windings W1 to W16. A plurality of slots 63 (96 pieces in the example of the third embodiment) are formed on the inside of the stator core 62.

As shown in FIG. 11, the U-phase windings include windings U1, U3, U5, U7, U9, U11, U13 and U15 for low/high speed drive to be used during both high speed drive and low speed drive and windings U2, U4, U6, U8, U10, U12, U14 and U16 for low speed drive to be used during only low speed drive. Further, the V-phase windings include windings V1, V3, V5, V7, V9, V11, V13 and V15 for low/high speed drive to be used during both high speed drive and low speed drive and windings V2, V4, V6, V8, V10, V12, V14 and V16 for low speed drive to be used during only low speed drive. Furthermore, the W-phase windings include windings W1, W3, W5, W7, W9, W11, W13 and W15 for low/high speed drive to be used during both high speed drive and low speed drive and windings W2, W4, W6, W8, W10, W12, W14 and W16 for low speed drive to be used during only low speed drive.

In this case, in the third embodiment, as shown in FIG. 10, the windings U1 and U3 for low/high speed drive and the windings U2 and U4 for low speed drive are distributively wound on the four slots 63 (63a, 63b, 63c and 63d), respectively. Specifically, in the four slots 63a, 63b, 63c and 63d, the windings U1 and U3 for low/high speed drive and the windings U2 and U4 for low speed drive are alternately disposed in the slots 63a, 63b, 63c and 63d. That is, the winding U1 for low/high speed drive is disposed in the slot 63a, and the winding U2 for low speed drive is disposed in the slot 63b. Further, the winding U3 for low/high speed drive is disposed in the slot 63c, and the winding U4 for low speed drive is disposed in the slot 63d.

Further, other configurations of the third embodiment are the same as the first and second embodiments.

In the third embodiment, as described above, each pole of each phase is formed of the four slots 63. In the four slots 63, the windings U2, U4, U6, U8, U10, U12, U14 and U16 (V2, V4, V6, V8, V10, V12, V14 and V16, W2, W4, W6, W8, W10, W12, W14 and W16) for low speed drive, and the windings U1, U3, U5, U7, U9, U11, U13 and U15 (V1, V3, V5, V7, V9, V11, V13 and V15, W1, W3, W5, W7, W9, W11, W13 and W15) are alternately disposed. Thus, in the four slots 63, unlike the case where the windings for low speed drive or the windings for low/high speed drive are disposed in the two adjacent slots 63, it is possible to easily suppress the magnetic flux generated from the windings for low speed drive or the windings for low/high speed drive from becoming dense.

Further, it should be considered that the embodiments disclosed herein are illustrative in all respects and not restrictive. The scope of protection is defined in the appended claims rather than in the foregoing description of the embodiments.

For example, the case where the windings for low speed drive and the windings for low/high speed drive are distributed by three or four slots for each pole of each phase has been described, but the present invention is not limited thereto. For example, the windings for low speed drive and the windings for low/high speed drive may be distributively wound by five or more slots.

Further, the case where the present invention is applied to the windings for low speed drive and the windings for low/high speed drive disposed in the stator of the motor has been described, but the present invention is not limited thereto. For example, the present invention may be applied to windings for low speed drive and windings for low/high speed drive disposed in a stator of a generator.

The case where the present invention is applied to the windings for low speed drive and the windings for low/high speed drive disposed in the stator of the motor which is driven by the three-phase AC power supply has been described, but the present invention is not limited thereto. For example, the present invention may be applied to the windings for low speed drive (low speed windings) and the windings for low/high speed drive (low/high speed windings) disposed in the stator of the motor (generator) which is driven by a single-phase or two-phase AC power supply.

The case where the windings for low speed drive and the windings for low/high speed drive, which are made of round wires, are disposed in the slots has been described, but the present invention is not limited thereto. For example, the windings for low speed drive and the windings for low/high speed drive, which are made of flat wires (copper wires having a rectangular (square) cross section), may be disposed in the slots, or the windings for low speed drive (low speed windings) and the windings for low/high speed drive (low/high speed windings), which are made of bus bars (rod-like conductors), may be disposed in the slots.

In addition, the rotary electric machine system 100 in accordance with the first to second embodiments may be mounted on a vehicle. As a configuration of the rotary electric machine system in this case, e.g., in the configuration shown in FIG. 1, the rotary electric machine system 100 and the AC power supply 200 may be replaced by a battery (DC power supply).

## Claims

1. A three-phase rotary electric machine system (100) comprising:
a rotor(41); and
a stator(31) including first windings to be used during both of a low speed drive and a high speed drive, second windings to be used only during the low speed drive, and a plurality of slots (33a, 33b, 33c) provided per pole per phase,
wherein two of the first windings are wound to be superimposed on each other by being inserted in a same slot, **characterized in that**,
the first windings and the second windings are distributively wound on different slots (33a, 33b, 33c) in the slots per pole per phase,
in each of the slots, either the first windings having the same phase or the second windings having the same phase are disposed, and
in slots having the same pole and the same phase, the first windings are disposed in outside slots on opposite sides, and the second windings are disposed in slots between every two outside slots where the first windings are disposed.

2. The rotary electric machine system (100) of claim 1, further comprising a winding switch unit(4) configured to switch connection between the first windings and the second windings,
wherein the first windings disposed in the slots are electrically connected to each other, and the first windings and the second windings are electrically connected to or disconnected from each other by the winding switch unit(4).

3. The rotary electric machine system (100) of claim 2, wherein, during the low speed drive, the first windings and the second windings disposed in the different slots are brought into a connection state by the winding switch unit(4), and during the high speed drive, the connection state between the first windings and the second windings is cut off by the winding switch unit(4).

4. The rotary electric machine system (100) of any one of claims 1 to 3, wherein the second windings per pole per phase are electrically connected to each other, and
the first windings per pole per phase are electrically connected to each other.

5. The rotary electric machine system(100) of claim 1, wherein the number of slots per pole per phase is three.

6. The rotary electric machine system(100) of any one of claims 1 to 4, wherein the number of slots per pole per phase is four or more.

## Patentansprüche

1. Dreiphasiges Rotierende-Elektrische-Maschine-System (100), aufweisend:
einen Rotor (41), und
einen Stator (31), welcher aufweist: erste Wicklungen, welche sowohl während eines Niedrigdrehzahl-Antriebs als auch während eines Hochdrehzahl-Antriebs zu verwenden sind, zweite Wicklungen, welche nur während des Niedrigdrehzahl-Antriebs zu verwenden sind, und eine Vielzahl von Aussparungen (33a, 33b, 33c), welche pro Pol pro Phase bereitgestellt sind,
wobei zwei von den ersten Wicklungen gewickelt sind, um sich zu überlagern, wobei sie in eine gleiche Aussparung eingesetzt sind,
**dadurch gekennzeichnet, dass**:
die ersten Wicklungen und die zweiten Wicklungen verteilt an unterschiedlichen Aussparungen (33a, 33b, 33c) in den Aussparungen pro Pol pro Phase gewickelt sind,
in jeder von den Aussparungen entweder die ersten Wicklungen, welche die gleiche Phase haben, oder die zweiten Wicklungen, welche die gleiche Phase haben, angeordnet sind, und
in Aussparungen, welche den gleichen Pol und die gleiche Phase haben, die ersten Wicklungen in Außenseite-Aussparungen an entgegengesetzten Seiten angeordnet sind, und die zweiten Wicklungen in Aussparungen zwischen jeweils zwei von den Außenseite-Aussparungen angeordnet sind, in welchen die ersten Wicklungen angeordnet sind.

2. Rotierende-Elektrische-Maschine-System (100) gemäß Anspruch 1, welches ferner eine Wicklungsschalteinheit (4) aufweist, welche konfiguriert ist, um die Verbindung zwischen den ersten Wicklungen und den zweiten Wicklungen zu schalten,
wobei die ersten Wicklungen, welche in den Aussparungen angeordnet sind, miteinander elektrisch verbunden sind, und die ersten Wicklungen und die zweiten Wicklungen mittels der Wicklungsschalteinheit (4) miteinander elektrisch verbunden oder voneinander getrennt werden.

3. Rotierende-Elektrische-Maschine-System (100) gemäß Anspruch 2, wobei die ersten Wicklungen und die zweiten Wicklungen, welche in den unterschiedlichen Aussparungen angeordnet sind, während des Niedrigdrehzahl-Antriebs mittels der Wicklungsschalteinheit (4) in einen Verbindungszustand gebracht werden, und der Verbindungszustand zwischen den ersten Wicklungen und den zweiten Wicklungen während des Hochdrehzahl-Antriebs mittels der Wicklungsschalteinheit (4) abgeschaltet wird.

4. Rotierende-Elektrische-Maschine-System (100) gemäß einem der Ansprüche 1 bis 3, wobei die zweiten Wicklungen pro Pol pro Phase miteinander elektrisch verbunden sind, und die ersten Wicklungen pro Pol und pro Phase miteinander elektrisch verbunden sind.

5. Rotierende-Elektrische-Maschine-System (100) gemäß Anspruch 1, wobei die Anzahl von Aussparungen pro Pol pro Phase drei beträgt.

6. Rotierende-Elektrische-Maschine-System (100) gemäß einem der Ansprüche 1 bis 4, wobei die Anzahl von Aussparungen pro Pol pro Phase vier oder mehr beträgt.

## Revendications

1. Système de machine rotative électrique triphasée (100) comprenant :
un rotor (41) ; et
un stator (31) comprenant de premiers enroulements destinés à être utilisés à la fois pendant un entraînement à faible vitesse et un entraînement à grande vitesse, de seconds enroulements destinés à être utilisés uniquement pendant l'entraînement à faible vitesse, et une pluralité de fentes (33a, 33b, 33c) disposées par pôle par phase,
dans lequel deux des premiers enroulements sont enroulés pour être superposés l'un à l'autre en étant insérés dans une même fente,
**caractérisé en ce que**,
les premiers enroulements et les seconds enroulements sont enroulés de manière distributive sur différentes fentes (33a, 33b, 33c) dans les fentes par pôle par phase,
dans chacune des fentes, soit les premiers enroulements ayant la même phase, soit les seconds enroulements ayant la même phase sont disposés,
et
dans des fentes ayant le même pôle et la même phase, les premiers enroulements sont disposés dans des fentes extérieures sur des côtés opposés, et les seconds enroulements sont disposés dans des fentes entre toutes les deux fentes extérieures où les premiers enroulements sont disposés.

2. Système de machine électrique rotative (100) selon la revendication 1, comprenant en outre une unité de commutation d'enroulement (4) conçue pour commuter la connexion entre les premiers enroulements et les seconds enroulements,
dans lequel les premiers enroulements disposés dans les fentes sont connectés électriquement les uns aux autres, et les premiers enroulements et les seconds enroulements sont connectés électriquement les uns aux autres ou déconnectés les uns des autres par l'unité de commutation d'enroulement (4) .

3. Système de machine électrique rotative (100) selon la revendication 2, dans lequel, pendant l'entraînement à faible vitesse, les premiers enroulements et les seconds enroulements disposés dans les différentes fentes sont amenés dans un état de connexion par l'unité de commutation d'enroulement (4), et pendant l'entraînement à grande vitesse, l'état de connexion entre les premiers enroulements et les seconds enroulements est coupé par l'unité de commutation d'enroulement (4).

4. Système de machine électrique rotative (100) selon l'une quelconque des revendications 1 à 3, dans lequel les seconds enroulements par pôle par phase sont connectés électriquement les uns aux autres, et
les premiers enroulements par pôle par phase sont connectés électriquement les uns aux autres.

5. Système de machine électrique rotative (100) selon la revendication 1, dans lequel le nombre de fentes par pôle par phase est de trois.

6. Système de machine électrique rotative (100) selon l'une quelconque des revendications 1 à 4, dans lequel le nombre de fentes par pôle par phase est de quatre ou plus.
